Europäisches Patentamt

European Patent Office

Office européen des brevets

(11) Publication number: **0 443 487 A1**

## EUROPEAN PATENT APPLICATION

(21) Application number: 91102270.5

(22) Date of filing: 18.02.91

(51) Int. Cl.⁵: **C03C 10/02**, A47J 36/04, H05B 6/64

(30) Priority: 21.02.90 JP 39970/90

(43) Date of publication of application:
28.08.91 Bulletin 91/35

(84) Designated Contracting States:
DE FR GB

(71) Applicant: MATSUSHITA ELECTRIC
INDUSTRIAL CO., LTD.
1006, Oaza Kadoma
Kadoma-shi, Osaka-fu, 571(JP)

(72) Inventor: Mizuno, Yasuo
67-1-105, Ikaga-nishimachi
Hirakata City, 573(JP)
Inventor: Ikeda, Masaki
37-15, Yamadaike-higashimachi
Hirakata City, 573(JP)
Inventor: Hattori, Akiyoshi
Shohtohryo, 5-103, Higashimachi
Moriguchi City, 570(JP)
Inventor: Yoshida, Akihiko
19-13, Kourien-Yamanote-cho
Hirakata City, 573(JP)
Inventor: Hiraka, Masahiro
6492-43, Takayama-cho
Ikoma City, 630-01(JP)

(74) Representative: Jung, Elisabeth, Dr. et al
Dr. Elisabeth Jung Dr. Jürgen Schirdewahn
Dipl.-Ing. Claus Gernhardt Patentanwälte
Clemensstrasse 30 Postfach 40 14 68
W-8000 München 40(DE)

(54) Glass-ceramic thermogenic body and method for producing the same.

(57) A glass-ceramic thermogenic body for use as a container in a microwave oven to give a burnt texture to food, which comprises a glass-ceramic material wholly or partly devitrificated to precipitate crystals of preferably of a perovskite structure capable of giving a large dielectric constant thereto. Producing of the glass-ceramic thermogenic body comprises; forming a glass-ceramic material containing at least one substance capable of precipitating as crystals capable of giving a large dielectric constant to said body and subsequent heating of the once formed body to crystallize said substance therein by whole or partial devitrification.

# GLASS-CERAMIC THERMOGENIC BODY AND METHOD FOR PRODUCING THE SAME

## BACKGROUNDS OF THE INVENTION

### 1. FIELD OF THE INVENTION

The present invention generally relates to thermogenic (heat-generating) bodies and is particularly concerned with such glass-ceramic thermogenic body that can be used in drying, cooking, defreezimng and the like process in a microwave oven and with the method for producing the same.

### 2. Prior Art

Cocking by the use of microwave oven is now being rapidly popularized for its handy and speedy processing though, it is sometimes disadvantageous in taste and flavor of the cooked food as compared with those cooked by a conventional cooking over open fire. Hence, there has been being developed a substance which is able to generate heat under microwave radiation and is designed to accompany with the food to be cooked in the microwave oven and to give burnt texture on the food, more preferably, on its surface.

Conventional materials which have hitherto been used for the stated purpose is prepared by coating a substrate of paper, plastic materials or the like substance, which withstands the heat at temperature used in the cooking in the microwave oven, say 180 - 200° C, with a layer of metals, dielectric substance of metal oxides or the like. But they have a common drawbacks that their temperature cannot be raised sufficiently high for the intended purpose, because of their low heat-resisting property and thus they are unable to give full play in generating heat.

Generally, there is the following relationship between the dielectric constant $\epsilon$ of a given dielectric material and the heat J generated in said dielectric material:

$$J = c\, f\, E^2\, \epsilon\, \tan \delta$$

wherein,
c represents a constant,
f is frequency in actual use (in the case of microwave oven: 2.45 GHz),
E represents electric field strength and
$\tan \delta$ is a dielectric loss.

Since $c\, f\, E^2$ can be regarded as a constant under a certain given condition, J is in direct proportion to the product of $\epsilon$ and $\tan \delta$. Since a dielectric material having a large dielectric constant also has a large dielectric loss in general, any given dielectric material of a large dielectric constant is convenient for use in a thermogenic body.

## OBJECT AND SUMMARY OF THE INVENTION

It is therefore the primary object of the present invention to provide a glass-ceramic thermogenic body which overcomes the stated drawbacks and which has an excellent heat-resistivity for use in the cooking at a higher temperature.

It is another object of the present invention to provide a convenient method for producing the glass-ceramic thermogenic body which can be implemented in a variety of applications.

According to the present invention, there is provided a glass-ceramic thermogenic body, which comprises a glass-ceramic material wholly or partly devitrificated to precipitate crystals of at least one component of substances having a large dielectric constant, and contained in said glass-ceramic material.

Said glass-ceramic material may be molded to form a solid body or may be deposited on any substrate having a good heat-resistant property as a layer adhered onto the substrate. Said solid body may be a container convenient for carrying food thereon, such as bowl, dish, tray, plate or the like and said substrate may be a metal plate or mesh capable of holding said layer tightly on its surface.

According to another aspect of the present invention, there is provided a method for producing said glass-ceramic thermogenic body useful for forming a glass-ceramic material containing at least one of substances, which is capable of precipitating as crystals therein and of giving a high dielectric constant to said body. The resultant thermogenic body is then heated again to crystallize said substance therein by whole or partial devitrification.

Said glass-ceramic material may be made by admixing a conventional composition of glass-forming metal oxides with said substance and melting the mixed components in any means such as crucible at a high temperature.

In a case of adhering a layer of the glass-ceramic thermogenic material to the substrate, an electrodeposition by means of electrophoresis is the most preferred because of its uniformity in the adhesion strength and in the small thickness of the deposited layer, and because said second heating process can be performed after the adhesion of the layer.

In performing said electrodeposition, a solution for the electrodeposition must be prepared beforehand. For this purpose, the formed glass material is at first pulverized to powder of small particle diameter, say, under 45 $\mu$m by, for instance, a mortar grinder. And then the obtained powder is ground in a wet state in, for instance, a ball mill for a long time period to give said solution.

Any other means for the adhesion, such as dipping, spray coating, electrostatic powder painting and the like, may also be possible to give said layer.

Since the glass-ceramic thermogenic body of the present invention has an excellent heat-resistant property, it can be brought to a high temperature and can likewise demonstrate an excellent thermogenic property. In more particular, the glass-ceramic materials do not deform by heating till a temperature whereat the desired devitrification process is effected. The glass-ceramic material radiates a far infra-red ray (of wavelength longer than $3\mu$m) with the rise of its temperature to demonstrate an effect that confines the inherent taste and/or flavor of a food in the food itself. This effect is advantageously exploited in baking sweet potatoes and in roasting coffee beans while effectively avoiding escape of their taste and/or flavor.

It is known that, in general, the dielectric constant of glass increases with the addition of and with the increase of the added amount of such a component as PbO or BaO. For instance, the dielectric constant of borosilicate glass (available under the trade name "Pyrex") is no more than 4.8 measured at 1 MHz at room temperature (the same measurement conditions are applied throughout the subsequent description), whereas that of barium borosilicate glass is 5.2, that of sodium lead glass is 8.2 and, that of potassium lead glass is as high as 9.6. If one wish to raise the dielectric constant of a given glass, he can achieve his object by precipitating crystals having a large dielectric constant in the glass. More particularly, this object may be accomplished by incorporating at least one component of a substance capable of precipitating as crystals having a large dielectric constant (for example, PbO and $TiO_2$ for forming $PbTiO_3$ crystals) into a glass batch containing glass-forming components ($Al_2O_3$,$SiO_2$,$B_2O_3$), melting said batch, cooling rapidly the molten batch, and heating the cooled batch again to effect devitrification at least partly.

A large number of research results on glass composition capable of precipitating crystals having a large dielectric constant which can be exploited for embodying the present invention have already been published. For instance, examples of the glass composition capable of precipitating $PbTiO_3$ crystals are disclosed as: the system $PbO$-$TiO_2$-$Al_2O_3$-$SiO_2$ glasses (T. Kokubo, Yogyokyokaishi (J. Jap. Ceram. Soc.),77(1969)-293); the system $PbO$-$B_2O_3$-$TiO_2$ glasses (C. G. Bergeron, J. Am. Cerm. Soc.,48(1965)115); the system $PbO$-$TiO_2$-$SiO_2$-$B_2O_3$ (or $Na_2O$) glasses (F.

W. Martin, Phys. Chem. Glasses, 6(1965)143); and the system $PbO$-$TiO_2$-$BaO$-$B_2O_3$ glasses (J. O. Isard, J. Am. Ceram. Soc.,52(1969)230). It is of course possible to adjust the dielectric constant and/or Curie point (the temperature at which the dielectric constant reaches its maximum) of the obtained glasses by adding a minute amount of metal oxides ($ZrO_2$, SrO, CaO, $Mn_2O_3$ and the like). Since there has reported a number of research results with respect to this point of subject directed to the application of the composition to capacitors, reiterations on this subject are omitted here.

Suitable glass-ceramic materials may further be exemplified as: one wherein $PbTiO_3$ crystals are precipitated and obtained from the system $PbO$-$TiO_2$-$Al_2O_3$-$SiO_2$ glasses disclosed in the United State Patent No. 438,293; one wherein $BaTiO_3$ crystals are precipitated and obtained from the system $BaO$-$TiO_2$-$Al_2O_3$-$SiO_2$ glasses disclosed in Tokkosyo 39-20,169; one wherein $NaNbO_3$ and/or $BaNb_2O_6$ crystals are precipitated and obtained from the system $BaO$-$Nb_2O_5$-$Na_2O$-$SiO_2$ glasses disclosed in Tokkosyo 41-4,990; and one wherein $LiTaO_3$ crystals are precipitated and obtained from the system $Al_2O_3$-$Nb_2O_5$-$Ta_2O_5$-$Li_2O$-$SiO_2$ glasses disclosed in Tokkosyo 47-836. Almost all of these glass-ceramic materials contain crystals of perovskite structure, i.e.,$MNO_3$ (M and N are different metal atoms). The disclosures of these glass-ceramic materials are however intended solely to the applications to capacitors, electroluminescent elements, resistors and the like, while no reference has ever been made to the applications to the thermogenic body for use in the microwave oven.

The foregoing and other characteristics of the present invention will be made more clear by the following description of the preferred embodiment thereof given by way of non-limitting example.

**EXAMPLE 1**

Various raw materials were mixed to give a composition: 55.9%BaO - 25.0%$TiO_2$ - 2.7%$Al_2O_3$ - 12.5%$SiO_2$ - 2.1%MgO - 1.8%$B_2O_3$ ( all percent by weight) and molten in a platinum crucible at 1400°C for 60 min., and the molten mixture was pressed by a pair of dies to mold a bowl of a diameter of 50 mm. The obtained bowl was then placed in an electric furnace to raise its temperature to 900°C at a rate of 5°C/min. kept at that temperature for 4 hrs. and thereafter stood to be cooled therein. The dielectric constant of the obtained glass-ceramic material is measured to indicate 65 and, crystals of $BaTiO_3$ are precipitated therein accompanied by a minute amount of those of $Ba_2TiSi_2O_8$. When this bowl was placed in a commercially available microwave oven (microwave output: 500 w), its temperature reaches about 300°
in 3 min..

## EXAMPLE 2

Various raw materials were mixed to give a composition: 40.6%BaO - 34.7%$TiO_2$ - 7.4%$Al_2O_3$ - 16.0%$SiO_2$ -1.4%CaO ( molar percent) and molten in a platinum crucible at 1400°C for 60 min., and the molten mixture was pressed by a pair of dies to mold a bowl of a diameter of 50 mm. The obtained bowl was then placed in an electric furnace to raise its temperature to 925°C at a rate of 5°C/min., kept at that temperature for 4 hrs. and thereafter stood to be cooled therein. The dielectric constant of the obtained glass-ceramic material is measured to indicate 800, and crystals of $BaTiO_3$ are precipitated therein. When this bowl was placed in a commercially-available microwave oven (microwave output: 500 w), its temperature reaches about 350°C in 1 min. and about 400°C in 3 min..

## EXAMPLE 3

Various raw materials were mixed to give a composition: 40.6%BaO - 34.7%$TiO_2$ - 7.4%$Al_2O_3$ - 16.0%$SiO_2$ -1.4%CaO ( molar percent) and molten in a plutinum crucible at 1400°C for 60 min., and the glass composition was rapidly cooled by a roller culleter, and pulverized by a motar grinder to give powder having particle size under 45$\mu$m. The obtained powder was then ground in a ball mill with the additon of alcohol and a small amount of water for 12 hrs. to give a solution for electrodeposition. This solution was used in an electrodeposition process. In the process, a cathode of stainless steel (SUS 430) mesh (interval of mesh: 5 mm) of a diameter of 200 mm and an anode of stainless steel (SUS 430) plate were used, and the glass particles are adhered to the surface of the cathode to form thereon a deposited glass-particle layer of a thickness of about 200 $\mu$m after an application of electric field of 100 V/cm for 5 min.. The deposited cathode was then heated under the same conditions as those described in EXAMPLE 2 to precipitate crystals of $BaTiO_3$ in the deposited layer. When the obtained mesh was placed in a commercially-available microwave oven (microwave output: 500 w) with 3 pieces of frozen cuttlefish fry (150 g) thereon, defreezing and cooking operation are completed in 3 min. to give a burnt texture on the cuttlefish fry. Contrary to this, another cooking without the mesh resulted in a cooked object with no burnt texture having a poorer taste and flavor.

Although in the above-described examples, glass-ceramic materials, wherein crystals of $BaTiO_3$ are precipitated, have exclusivly been discussed as representative ones, it is needless to say that the other ones capable of precipitating crystals of $PbTiO_3$, $NaNbO_3$ and/or $BaNb_2O_6$, or $LiTaO_3$ therein can likewise be used for the intended purpose. In this case, the dielectric constant of the obtained glass-ceramic material may vary with the glass composition and the species of the substance to be crystallized therein. It is safely said however that the one having a relatively small dielectric constant as discussed in EXAMPLE 1 raises its temperature gradually, and hence it is suited for such thorough cooking of large object as in the case of baking sweet potatoes; while the other one having a relatively large dielectric constant as discussed in EXAMPLES 2 and 3 raises its temperature rapidly and, hence it is suited for such cooking of small object as in the case of defreezing and warming fried cuttlefish.

Having thus described, it is clear that the matters discussed above have been given only by way of non limiting example. Variations and modifications of the present invention will be made possible without goint out of the scopes of the appended claims.

## Claims

1. A glass-ceramic thermogenic body which comprises a glass-ceramic material wholly or partly devitrificated to precipitate crystals of at least one component of substances having a large dielectric constant contained in said glass-ceramic material.

2. The glass-ceramic thermogenic body as claimed in Claim 1 wherein said glass-ceramic material is molded to form a solid body capable of being placed in a microwave oven accompanied by food to be processed therein.

3. The glass-ceramic thermogenic body as claimed in Claim 2 wherein said body takes a shape of container convenient for carrying said food thereon.

4. The glass-ceramic thermogenic body as claimed in Claim 3 wherein said container is one selected from the group consisting of bowl, dish, tray and plate.

5. The glass-ceramic thermogenic body as claimed in Claim 1 wherein said glass-cermic material is deposited on a substrate having a good heat-resistant property as a layer adhered on the substrate.

6. The glass-ceramic thermogenic body as claimed in Claim 5 wherein said substrate is a metal plate or mesh capable of holding said layer tightly on its surface.

7. The glass-ceramic thermogenic body as claimed in any of Claims 1 - 6 wherein said crystals having a large dielectric constant have a crystal structure of perovskite type.

8. A method for producing a glass-ceramic thermogenic body which comprises forming a glass-ceramic material containing at least one substance capable of precipitating as crystals and capable of giving a large dielectric constant to said body and then heating the once formed body to crystallize said substance therein by whole or partial devitrification.

9. The method for producing glass-ceramic thermogenic body as claimed in Claim 8 wherein said glass-ceramic material is first adhered to a substrate of heat-resistant metal as a superimposed layer on the substrate and then the adhered substrate carrying said superimposed layer is heated to crystallize said substance in said layer by whole or partial devitrification.

10. The method for producing glass-ceramic thermogenic body as claimed in Claim 9 wherein said adhering operation is performed by electrodeposition by means of electrophoresis.

11. The method for producing glass-ceramic thermogenic body as claimed in Claim 10 wherein said electrodeposition is performed with a solution prepared by wet state grinding of the pulverized glass-ceramic materials.

12. The method for producing glass-ceramic thermogenic body as claimed in any of Claims 8 - 11 wherein said said crystals having a large dielectric constant have a crystal structure of perovskite type.

European
Patent Office

**EUROPEAN SEARCH
REPORT**

Application Number

**EP 91 10 2270**

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | Z. STRNAD: "Glass-ceramic materials", 1986, page 180, Elsevier, Amsterdam, NL<br>* Paragraph 6.4.2 * | 1,7,8,12 | C 03 C 10/02<br>A 47 J 36/04<br>H 05 B 6/64 |
| Y | IDEM | 2-6,9-11 | |
| Y | PATENT ABSTRACTS OF JAPAN, vol. 13, no. 532 (C-659), 28th November 1989;<br>& JP-A-1 218 416 (NIPPON DRY CHEM.)<br>* Complete abstract * | 2-4 | |
| Y | M.H. LEWIS: "Glasses and glass-ceramics", 1989, pages 253-259, Chapman and Hall, London, GB<br>* Page 258 * | 5-6,9-11 | |
| A | EP-A-0 294 503   (DEGUSSA)<br>* Claims * | 1 | |

| | TECHNICAL FIELDS SEARCHED (Int. Cl.5) |
|---|---|
| | C 03 C |

The present search report has been drawn up for all claims

| Place of search | Date of completion of search | Examiner |
|---|---|---|
| The Hague | 17 May 91 | BOUTRUCHE J.P.E. |